(19) Europäisches Patentamt
European Patent Office
Office européen des brevets

(11) **EP 4 582 234 A1**

(12) **EUROPEAN PATENT APPLICATION**
published in accordance with Art. 153(4) EPC

(43) Date of publication:
**09.07.2025 Bulletin 2025/28**

(21) Application number: **23860444.1**

(22) Date of filing: **30.08.2023**

(51) International Patent Classification (IPC):
**B28C 7/04** *(2006.01)*     **C04B 28/26** *(2006.01)*

(52) Cooperative Patent Classification (CPC):
**B28C 7/04; C04B 28/26; Y02P 40/10**

(86) International application number:
**PCT/JP2023/031622**

(87) International publication number:
**WO 2024/048682 (07.03.2024 Gazette 2024/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.08.2022 JP 2022137991**

(71) Applicants:
• **IHI Corporation**
  **Tokyo 135-8710 (JP)**
• **IHI Construction Materials Co., Ltd.**
  **Tokyo 130-0026 (JP)**

(72) Inventors:
• **KISAKU Tomoaki**
  **Tokyo 135-8710 (JP)**
• **ITO Yuji**
  **Tokyo 130-0026 (JP)**

• **KOMORI Teruo**
  **Niigata-shi Niigata 950-3102 (JP)**
• **YAMAMURA Yuki**
  **Tokyo 135-8710 (JP)**
• **SUZUKI Hiroya**
  **Tokyo 130-0026 (JP)**
• **SAITO Yukiko**
  **Niigata-shi Niigata 950-3102 (JP)**
• **JING Nie**
  **Tokyo 135-8710 (JP)**
• **SHIOIRI Shiori**
  **Tokyo 130-0026 (JP)**
• **MARUYAMA Hayato**
  **Niigata-shi Niigata 950-3102 (JP)**
• **ISOBE Miki**
  **Niigata-shi Niigata 950-3102 (JP)**
• **KASAHARA Kenji**
  **Niigata-shi Niigata 950-3102 (JP)**

(74) Representative: **TBK**
  **Bavariaring 4-6**
  **80336 München (DE)**

(54) **GEOPOLYMER COMPOSITION MANUFACTURING METHOD**

(57)     Disclosed herein is a method for producing a geopolymer composition that does not cause a reduction in strength developability even when an alkali solution added in a production process is replaced with an alkali powder and water.

The production method includes an alkali powder pulverization step in which all or part of aggregate is first charged into a mixer, part or all of mixing water in a primary water amount is charged, a resultant is mixed to allow a surface of the aggregate in the mixer to evenly hold water, an alkali powder is charged into the mixer, and a resultant is mixed to pulverize the alkali powder, which is followed by charging the residual materials including an active filler and mixing a resultant to form a geopolymer composition. Therefore, the alkali powder is finely pulverized in the alkali powder pulverization step to have an increased specific surface area, which makes it possible to increase the dissolution rate of the alkali powder in water. This makes it possible to increase the speed of a chemical reaction.

EP 4 582 234 A1

# Fig. 1

```
                    ┌─────────────────────┐
       S10 ─────────│  CHARGE AGGREGATE   │
                    └─────────────────────┘
                              │
                              ▼
                    ┌─────────────────────┐
       S11 ─────────│       CHARGE        │
                    │    MIXING WATER     │
                    └─────────────────────┘
                              │
                              ▼
                    ┌─────────────────────┐
       S12 ─────────│    MIX FOR FIRST    │
                    │   MIXING TIME T1    │
                    └─────────────────────┘
                              │
                              ▼
                    ┌─────────────────────┐
       S13 ─────────│       CHARGE        │
                    │    ALKALI POWDER    │
                    └─────────────────────┘
                              │
                              ▼
                    ┌─────────────────────┐
       S14 ─────────│   MIX FOR SECOND    │
                    │   MIXING TIME T2    │
                    └─────────────────────┘
                              │
                              ▼
                    ┌─────────────────────┐
       S15 ─────────│       CHARGE        │
                    │    ACTIVE FILLER    │
                    └─────────────────────┘
                              │
                              ▼
                    ┌─────────────────────┐
       S16 ─────────│    MIX FOR THIRD    │
                    │   MIXING TIME T3    │
                    └─────────────────────┘
                              │
                              ▼
                    ┌─────────────────────┐
       S17 ─────────│       CHARGE        │
                    │  RESIDUAL MATERIALS │
                    └─────────────────────┘
                              │
                              ▼
                    ┌─────────────────────┐
       S18 ─────────│   MIX FOR FOURTH    │
                    │   MIXING TIME T4    │
                    └─────────────────────┘
                              │
                              ▼
                    ┌─────────────────────┐
       S19 ─────────│      COMPLETE       │
                    │       MIXING        │
                    └─────────────────────┘
```

PRIMARY MIXING STEP

ALKALI POWDER PULVERIZATION STEP

FILLER MIXING STEP

SECONDARY MIXING STEP

# EP 4 582 234 A1

**Description**

TECHNICAL FIELD

The present invention relates to a method for producing a geopolymer composition for use in forming a structure in, for example, civil engineering or construction.

BACKGROUND ART

Conventionally, in civil engineering, construction, and the like, structures have generally been formed using concrete or mortar. However, geopolymer compositions have received attention in recent years as an alternative material to concrete or mortar, and the application of geopolymer concrete to railroad ties, wall materials for buildings, and the like has been examined.

A geopolymer composition is a hardened body obtained by mixing and reacting an alkali-active amorphous powder (active filler) such as fly ash (coal ash), metakaolin, and blast furnace slag, with an alkali solution for activating it. Geopolymer concrete achieves a composition that develops strength comparable to that of cement concrete by further adding fine aggregate, coarse aggregate, and the like to an alkali-active amorphous powder and an alkali solution(see Table 1).

[Table 1]

| Quantity of material per unit volume of concrete (kg/m3) | | | | | | |
|---|---|---|---|---|---|---|
| FA | BS | KOH | $SiO_2$ | Water | Fine aggregate | Coarse aggregate |
| 456 | 24 | 140 | 47 | 109 | 659 | 850 |
| | | Produced water glass = 296 | | | | |

It should be noted that in Table 1, FA denotes JIS Type-I fly ash, BS denotes blast furnace slag fine powder (Blaine's value: 4000 $cm^2$/g), and produced water glass is produced by mixing and dissolving KOH and $SiO_2$ in water.

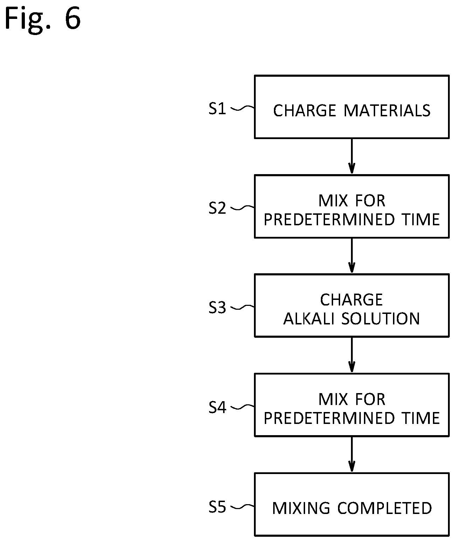

Generally, as shown in Figure 6, geopolymer concrete is conventionally produced by first charging materials such as a powder (active filler) such as coal ash, blast furnace slag, and metakaolin and aggregate (fine aggregate, coarse aggregate) into a mixer (S1), stirring the resultant for a predetermined time (e.g., 2 minutes) (S2), then adding an alkali solution such as water glass (S3), mixing the resultant in the mixer for a predetermined time (e.g., 5 minutes) (S4), and completing the mixing. Then, the mixed product is poured into a formwork, cured for several hours, and then demolded after hardening to form a structure (see, for example, Patent Literature 1).

CITATION LIST

PATENT LITERATURE

Patent Literature 1: Japanese Patent No. 5091519

SUMMARY OF INVENTION

TECHNICAL PROBLEM

Meanwhile, the water glass added in step S2 in the above production method is one having a molar ratio (alkali amount/water amount) of 0.1 or more so that the composition to be produced has a predetermined strength, but in this case, the water glass has high temperature dependency and viscosity. This requires great efforts in the steps of storage, measurement, charging, and mixing of the alkali solution in the production process, which is a major problem for mass production of a geopolymer concrete product.

Therefore, attempts have been made to produce geopolymer concrete by replacing part or all of the water glass with "alkali powder and water". However, strength developability of geopolymer concrete is reduced due to the low dissolution rate of the alkali powder, which causes a problem that curing requires time and effort.

In light of such problems, it is an object of the present invention to provide a method for producing a geopolymer composition that does not cause a reduction in strength developability even when an alkali solution added in its production process is replaced with an alkali powder and water.

SOLUTION TO PROBLEM

In order to achieve the above object, the present invention is directed to a method for producing a geopolymer composition containing, as raw materials, an active filler, an alkali activator, and aggregate, part or all of the alkali activator being a combination of an alkali powder and mixing water, the method including an alkali powder pulverization step in which all or part of the aggregate is first charged into a mixer, part or all of the mixing water in a primary water amount is charged, and a resultant is mixed to allow a surface of the aggregate in the mixer to hold water, the alkali powder is then charged into the mixer, and a resultant is mixed to pulverize the alkali powder, wherein the residual materials are charged and mixed after the alkali powder pulverization step.

In this case, the alkali powder is finely pulverized in the alkali powder pulverization step to have an increased specific surface area, and therefore its dissolution rate in water increases, thereby increasing the speed of a chemical reaction.

ADVANTAGEOUS EFFECTS OF INVENTION

According to the present invention, geopolymer concrete can be mixed better as compared to the case of conventional mixing, and therefore the dissolution rate of the alkali powder in water increases, thereby increasing the speed of a chemical reaction. Therefore, even when the alkali solution is replaced with an alkali powder and water, strength developability of geopolymer concreate can be improved, which makes it possible to significantly reduce time and effort required for curing. Further, since geopolymer concrete is mixed better as compared to the case of conventional mixing, the concrete has a high slump and high flowability, which makes it possible to improve workability. Further, even when almost all of the conventional water glass (alkali solution) is replaced with "alkali powder and water", geopolymer concrete having high strength developability can be obtained, which makes it possible to eliminate the need for large storage facilities such as a tank for temporarily storing the water glass and measuring tools and to reduce the cost of materials used for geopolymer concrete due to a reduction in the amount of the expensive water glass to be used.

BRIEF DESCRIPTION OF DRAWINGS

Figure 1 is a diagram showing production steps of a composition according to an embodiment of the present invention.

Figure 2 is a diagram showing a torque test result.

Figure 3 is a diagram showing a torque test result.

Figure 4 is a diagram showing a torque test result.

Figure 5 is a photograph for comparing geopolymer concrete test specimens different in their mixing method.

Figure 6 is a diagram showing production steps of a conventional geopolymer composition.

DESCRIPTION OF EMBODIMENTS

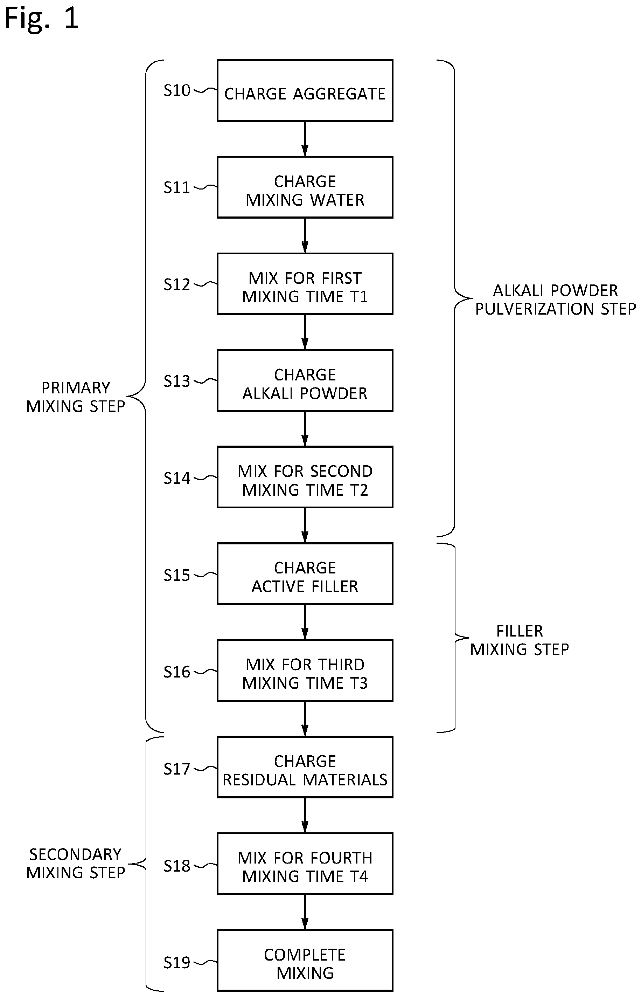

Figure 1 to Figure 4 show, as an embodiment of the present invention, a method for producing a geopolymer composition for use in a structure in, for example, civil engineering or construction.

A geopolymer composition of the present embodiment contains, as raw materials, an active filler, an alkali activator, and aggregate, and part or all of the alkali activator is a combination of an alkali powder and mixing water.

The active filler is a powder activated and solidified by mixing with an alkali activator, and is composed of, for example, an alkali-active amorphous powder, such as fly ash (coal ash), metakaolin, and blast furnace slag.

The alkali activator is composed of an alkali powder and mixing water, and the alkali powder is a powder of sodium silicate, potassium silicate, sodium hydroxide, or the like.

The aggregate is composed of sand, gravel, artificial aggregate, or the like, and is classified into fine aggregate and coarse aggregate according to the size of particles.

An alkaline agent used for geopolymer concrete is originally a solid (e.g., a powder or granules), but in a geopolymer concrete production process, the alkaline agent needs to be dissolved in water to be chemically reacted with an active filler. On the other hand, there are various active fillers, and all the active fillers are in the form of powder and are brought into contact with an alkali solution in mixed geopolymer concrete and then hardened through chemical reaction.

Therefore, a high-speed chemical reaction between the alkali powder and the active filler due to their small particle size and large specific surface area is advantageous for development of strength. However, the use of an active filler having a too small particle size and a too large specific surface area is disadvantageous to achieve workability (flowability) for pouring mixed geopolymer concrete into a formwork and molding it.

Therefore, in the present embodiment, materials to be mixed are charged in divided portions (primary mixing step and secondary mixing step), and mixing water to be charged is divided into primary water and secondary water. Hereinafter, the method for producing a geopolymer composition according to the present embodiment will be described with reference to Figure 1. It should be noted that a mixer to be used is one with a mixing volume of 0.45 m$^3$ or more for use in industrial production.

First, part of aggregate is first charged into a mixer (S10), part of mixing water in a primary water amount is then charged (S11), and the resultant is mixed until a predetermined first mixing time T1 elapses (S12). In this way, the surface of the aggregate in the mixer is allowed to evenly hold water. Then, an alkali powder is charged into the mixer (S13) and the resultant is mixed until a predetermined second mixing time T2 elapses (S14). In this way, the alkali powder is pulverized by rubbing it with the aggregate. Steps S10 to S14 correspond to an alkali powder pulverization step.

Then, part of an active filler is charged into the mixer (S15) and the resultant is mixed until a predetermined third mixing time T3 elapses (S16). Steps S15 to S16 correspond to a filler charging and mixing step. It should be noted that the alkali powder pulverization step (S10 to S14) and the filler charging and mixing step (S15 to S16) correspond to a primary mixing step.

Then, the residual materials (e.g., the residual active filler, alkali water, secondary water, the residual aggregate, an admixture) are charged (S17) and the resultant is mixed until a predetermined fourth mixing time T4 elapses (S18). In this way, the mixing step of a geopolymer composition is completed (S19), and the resultant is poured into a formwork or the like and hardened to form a structure made of geopolymer concrete. It should be noted that the residual material charging and mixing step (S17 to S19) correspond to a secondary mixing step.

Here, in the above steps, the first mixing time T1 is set to 10 seconds or longer and 90 seconds or shorter (preferably 15 seconds or longer and 90 seconds or shorter), the second mixing time T2 is set to 15 seconds or longer and 120 seconds or shorter (preferably 30 seconds or longer and 90 seconds or shorter), the third mixing time T3 is set to 15 seconds or longer and 120 seconds or shorter (preferably 30 seconds or longer and 120 seconds or shorter), and the fourth mixing time T4 is set to 60 seconds or longer and 360 seconds or shorter (preferably 90 seconds or longer and 240 seconds or shorter).

Further, in the above mixing step, the water/powder ratio of the active filler (W/F (%)) is preferably set so that a state close to a capillary state is achieved to exert a high mixing force (shearing force) in the mixer to promote a chemical reaction. The capillary state is one of phases that depend on the amount of a liquid when a powder is mixed with the liquid. In the capillary state, the binding force between particles is maximum and a mixing torque is also maximum.

It should be noted that the water/powder ratios of active fillers required to achieve a capillary state (capillary water ratios: $\alpha$) depend on the characteristics of the active fillers, and are therefore previously determined by a torque test (e.g., Japan Railway Construction, Transport and Technology Agency, Sprayed Concrete Design and Construction Guideline (Proposal), pp. 35 to 36, Sep. 2011).

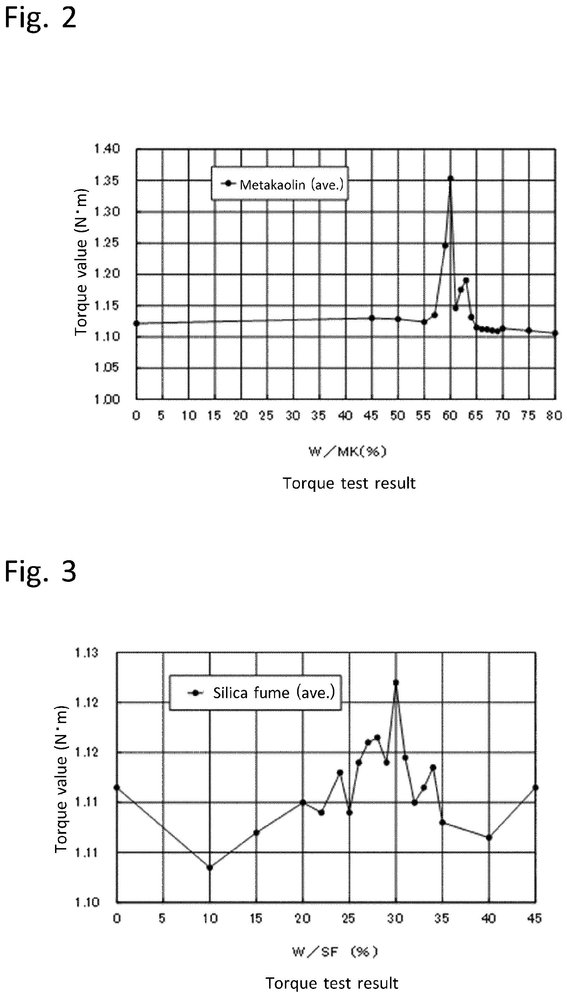

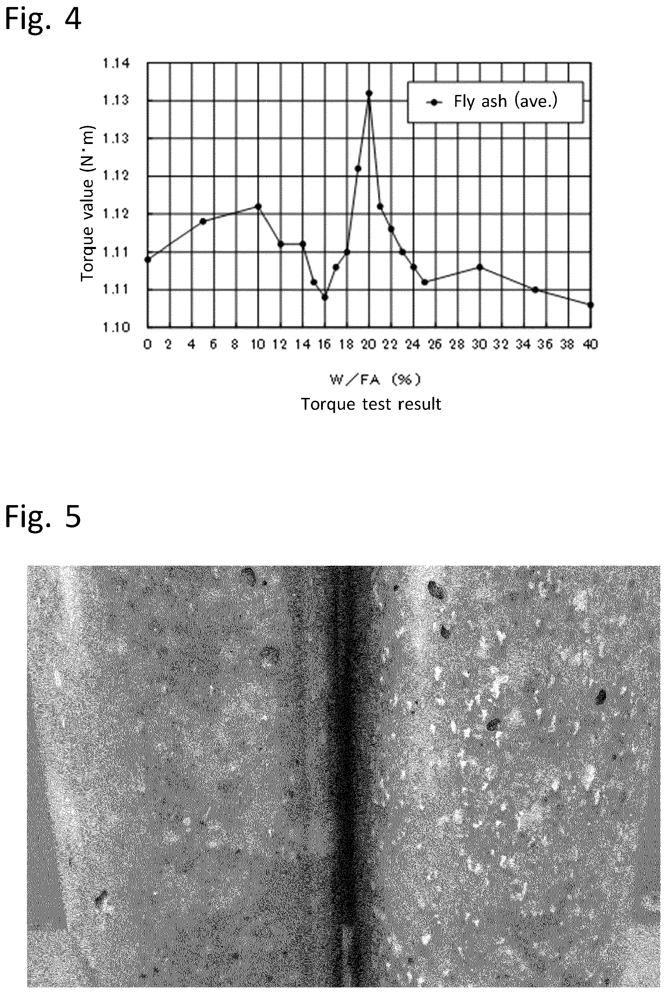

For example, Figure 2 shows a torque test result of metakaolin (MK), and a maximum torque is obtained when the water/powder ratio (W/MK (%)) is 60%. Figure 3 shows a torque test result of silica fume (SF), and a maximum torque is obtained when the water/powder ratio (W/SF (%)) is 30%. Figure 4 shows a torque test result of fly ash (FA), and a maximum torque is obtained when the water/powder ratio (W/FA (%)) is 29%.

The ratio of water that fine aggregate can adsorb to its surface (surface adsorbed water ratio: $\beta$OH) depends on the characteristics of the fine aggregate, and is therefore previously determined by a centrifugal test (e.g., Japan Railway Construction, Transport and Technology Agency, Sprayed Concrete Design and Construction Guideline (Proposal), pp. 36 to 39, Sep. 2011).

Specifically, in order to exert a high mixing force (shearing force) in the mixer, a primary water amount W1 (kg/m$^3$) of mixing water charged in the alkali powder pulverization step is preferably set to a water amount determined by the following formula (1).

$$W1 = \Sigma \alpha i \cdot Fi + S \cdot \beta OH \quad \cdots \quad (1)$$

wherein $\alpha i$ represents the capillary water ratio (%) of a powder i, Fi represents the quantity of the powder i per unit volume of concrete (kg/m$^3$), S represents the quantity of fine aggregate per unit volume of concrete (kg/m$^3$), and $\beta$OH represents the surface adsorbed water ratio (%) of the fine aggregate.

When the capillary water ratio of the active filler is higher than that of a usual powder, the primary water amount W1 (kg/m$^3$) determined by the above formula (1) may be larger than a predetermined quantity of water per unit volume of concrete. In this case, a primary active filler amount corresponding to W1 equal to the quantity of water per unit volume of concrete is calculated backwards and defined as F1, and a residual active filler amount is defined as F2.

Specifically, water is charged in a primary water amount W1 ($kg/m^3$) equal to the above-described quantity of water per unit volume of concrete in the alkali powder pulverization step, the active filler is charged in a primary active filler amount F1 in the filler charging and mixing step, and then the active filler is charged in a residual active filler amount F2 in the residual material charging and mixing step.

As described above, the present embodiment includes an alkali powder pulverization step in which all or part of aggregate is first charged into a mixer, part (or all) of mixing water in a primary water amount is charged and the resultant is mixed to allow the surface of the aggregate in the mixer to evenly hold water, and an alkali powder is charged into the mixer and the resultant is mixed to pulverize the alkali powder, which is followed by charging the residual materials including the active filler and mixing the resultant to form a geopolymer composition. Therefore, the alkali powder is finely pulverized in the alkali powder pulverization step to have an increased specific surface area, which makes it possible to increase the speed of a chemical reaction. This makes it possible to better mix geopolymer concrete as compared to the case of conventional mixing, thereby increasing the dissolution rate of the alkali powder in water. Therefore, even when the alkali solution is replaced with an alkali powder and water, strength developability of geopolymer concreate can be improved, which makes it possible to significantly reduce time and effort required for curing. Further, since geopolymer concrete is better mixed as compared to the case of conventional mixing, the concrete has a high slump and high flowability, which makes it possible to improve workability.

Further, even when almost all of the water glass (alkali solution) is replaced with "alkali powder and water", geopolymer concrete having high strength developability can be obtained, which makes it possible to eliminate the need for large storage facilities such as a tank for temporarily storing the water glass and measuring tools and to reduce the cost of materials used for geopolymer concrete due to a reduction in the amount of the expensive water glass to be used.

Further, after the alkali powder pulverization step, all or part of the active filler is charged into the mixer and the resultant is mixed in the filler mixing step, which makes it possible to bring the active filler into contact with the alkali solution adhering to the surface of the aggregate and to mix the resultant with a high shearing force, thereby further improving geopolymer concrete strength developability due to an increase in the speed of a chemical reaction. This makes it possible to further reduce time and effort required for curing.

In this case, in the alkali powder pulverization step, mixing water is charged in a primary water amount W1 calculated according to the type of active filler used so that the water/powder ratio (capillary water ratio) of the active filler is set to achieve a state close to a capillary state, and therefore even when any one of active fillers different in characteristics is used, a high mixing force (shearing force) can always be exerted in the mixer to enhance the effect of promoting a chemical reaction.

It should be noted that the above embodiment has been described with reference to a case where part of mixing water is charged as primary water in the alkali powder pulverization step, but all of the mixing water may be charged.

Further, the above embodiment has been described with reference to a case where part of the active filler is charged in the filler mixing step, but all of the active filler may be charged.

It should be noted that the above embodiment has been described with reference to a case where the alkali activator is a combination of an alkali powder and mixing water, but the alkali activator may be a combination of an alkali powder, mixing water, and a relatively small amount of water glass.

The above embodiment is an example of the present invention, and the present invention is not limited to the above embodiment.

EXAMPLES

A test was performed under conditions shown below in Table 2, in which a mixing method was changed without changing the composition of geopolymer concrete. As can be seen from the results shown in Table 3, the slump, slump flow, and concrete temperature after mixing of the obtained double-mixing geopolymer concrete (present invention) are higher than those of the obtained conventional single-mixing geopolymer concrete (conventional example) even when the mixing time is the same, which indicates that the geopolymer concrete is better mixed in the case of double mixing. Further, the results also confirmed that in the case of double mixing, the 350 mm flow time was short and therefore the flow rate of the geopolymer concrete became higher, which was advantageous for production due to a reduction in time required to fill geopolymer concrete into a formwork. It should be noted that the compressive strength in Table 3 represents the result of a strength test at a material age of 7 days, and the upper value represents a compressive strength measured under curing conditions of a heating temperature of 60°C, 90%RH, a temperature rise time of 2 hours, a constant temperature for 68 hours, and a temperature drop time of 2 hours, and the lower value represents a compressive strength measured under curing conditions of a heating temperature of 60°C, 90%RH, a temperature rise time of 2 hours, and a constant temperature for 3 hours without controlling a temperature drop time. The result confirmed that the compressive strength was higher in the case of double mixing irrespective of curing time.

[Table 2]

| Conditions of geopolymer concrete mixing test (A 55-liter twin-shaft forced mixing test mixer was used.) | |
|---|---|
| Water/binder ratio W/B(%) | 75.0 |
| Active filler | Mixture of two types of active fillers (B) |
| Alkaline agent | Alkali powder (AP) + Alkali solution (AS) |
| Other materials | Water (W), Fine aggregate (S), Coarse aggregate (G) |
| Mixing method | Double mixing: G+S+W+AS → 15-second mixing → AP → 45-second mixing → B → 180-second mixing → Discharge |
| | Conventional single mixing: G+B+AP+S → 30-second mixing → W+AS → 210-second mixing → Discharge |

[Table 3]

| Conditions of geopolymer concrete after mixing | | | | | | | |
|---|---|---|---|---|---|---|---|
| Mixing method | Slump (cm) | Slump flow (mm) | Air content (%) | Concrete temperature after mixing (°C) | Room temperature (°C) | Flow time to 350 mm (sec) | Compressive strength (N/mm2) |
| Double mixing | 23 | 390 x 385 (Average 388) | 2.8 | 28.7 | 21.6 | 14 | 66.6 <br> 49.4 |
| Conventional single mixing | 21.5 | 355 x 347 (Average 351) | 2.9 | 27.1 | 21.3 | 37.3 | 63.3 <br> 49.2 |

Figure 5 shows images of cylindrical geopolymer concrete test specimens after demolding to compare double mixing (present invention) and conventional single mixing (conventional example). As can be seen from the images, the number of white spots (alkali powder) on the surface of the test specimen obtained by double mixing (left) is much smaller than that obtained by conventional single mixing (right), which indicates that the geopolymer concrete is better mixed in the case of double mixing (present invention).

REFERENCE SIGNS LIST

S10 to S14 Alkali powder pulverization step, S15 to S16 Filler mixing step

**Claims**

1. A method for producing a geopolymer composition comprising, as raw materials, an active filler, an alkali activator, and aggregate,
   part or all of the alkali activator being a combination of an alkali powder and mixing water, the method comprising:

   an alkali powder pulverization step in which all or part of the aggregate is first charged into a mixer, part or all of the mixing water in a primary water amount is charged, and a resultant is mixed to allow a surface of the aggregate in the mixer to hold water, the alkali powder is then charged into the mixer, and a resultant is mixed to pulverize the alkali powder,
   wherein the residual materials including the active filler are charged and mixed after the alkali powder pulverization step.

2. The method for producing a geopolymer composition according to claim 1, comprising after the alkali powder pulverization step, a filler mixing step in which part or all of the active filler is charged into the mixer and a resultant is mixed,

wherein the residual materials are charged and mixed after the filler mixing step.

3. The method for producing a geopolymer composition according to claim 2, wherein

in the alkali powder pulverization step, all or part of the aggregate is charged into the mixer, part or all of the mixing water is charged and a resultant is mixed until a predetermined first mixing time elapses, and then the alkali powder is charged into the mixer and a resultant is mixed until a predetermined second mixing time elapses, and in the filler charging and mixing step, the active filler is charged into the mixer and a resultant is mixed until a predetermined third mixing time elapses, and the residual materials are charged and a resultant is mixed until a predetermined fourth mixing time elapses.

4. The method for producing a geopolymer composition according to claim 3, wherein

the mixer is a mixer having a mixing volume of 0.45 m$^3$ or more,
the first mixing time is set to 10 seconds or longer and 90 seconds or shorter, the second mixing time is set to 15 seconds or longer and 120 seconds or shorter, the third mixing time is set to 15 seconds or longer and 120 seconds or shorter, and the fourth mixing time is set to 60 seconds or longer and 360 seconds or shorter.

5. The method for producing a geopolymer composition according to any one of claims 1 to 4, wherein in the alkali powder pulverization step, water is charged in a primary water amount W1 (kg/m$^3$) determined by the following formula (1):

$$W1 = \Sigma \alpha i \cdot Fi + S \cdot \beta OH \cdot \cdot \cdot (1)$$

wherein $\alpha i$ represents a capillary water ratio (%) of a powder, Fi represents a quantity of the powder per unit volume of concrete (kg/m$^3$), S represents a quantity of fine aggregate per unit volume of concrete (kg/m$^3$), and $\beta OH$ represents a surface adsorbed water ratio (%) of the fine aggregate.

6. The method for producing a geopolymer composition according to claim 5, wherein

when a capillary water ratio of the active filler is higher than that of a usual powder and a primary water amount W1 (kg/m$^3$) determined by the above formula (1) is larger than a predetermined quantity of water per unit volume, a primary active filler amount corresponding to a primary water amount W1 equal to the quantity of water per unit volume is calculated backwards and defined as F1, and a residual active filler amount is defined as F2, and water is charged in a primary water amount W1 (kg/m$^3$) equal to the quantity of water per unit volume of concrete in the alkali powder pulverization step, and the active filler is charged in a primary active filler amount F1 in the filler charging and mixing step, and then the active filler is charged in a residual active filler amount F2 in the residual material charging and mixing step.

# Fig. 1

Flowchart:

- S10 — CHARGE AGGREGATE
- S11 — CHARGE MIXING WATER
- S12 — MIX FOR FIRST MIXING TIME T1
- S13 — CHARGE ALKALI POWDER
- S14 — MIX FOR SECOND MIXING TIME T2
- S15 — CHARGE ACTIVE FILLER
- S16 — MIX FOR THIRD MIXING TIME T3
- S17 — CHARGE RESIDUAL MATERIALS
- S18 — MIX FOR FOURTH MIXING TIME T4
- S19 — COMPLETE MIXING

PRIMARY MIXING STEP (S10–S16)

SECONDARY MIXING STEP (S17–S19)

ALKALI POWDER PULVERIZATION STEP (S10–S14)

FILLER MIXING STEP (S15–S16)

Fig. 2

W／MK(%)

Torque test result

Fig. 3

W／SF (%)

Torque test result

# Fig. 4

Torque test result

# Fig. 5

# Fig. 6

S1 — CHARGE MATERIALS

↓

S2 — MIX FOR PREDETERMINED TIME

↓

S3 — CHARGE ALKALI SOLUTION

↓

S4 — MIX FOR PREDETERMINED TIME

↓

S5 — MIXING COMPLETED

# INTERNATIONAL SEARCH REPORT

| International application No. |
| --- |
| **PCT/JP2023/031622** |

### A. CLASSIFICATION OF SUBJECT MATTER

***B28C 7/04***(2006.01)i; ***C04B 28/26***(2006.01)i
FI: B28C7/04; C04B28/26

According to International Patent Classification (IPC) or to both national classification and IPC

### B. FIELDS SEARCHED

Minimum documentation searched (classification system followed by classification symbols)

B28C7/04-7/12; C04B28/24-28/26

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JSTChina/JST7580 (JDreamIII)

### C. DOCUMENTS CONSIDERED TO BE RELEVANT

| Category* | Citation of document, with indication, where appropriate, of the relevant passages | Relevant to claim No. |
| --- | --- | --- |
| A | US 2015/0203405 A1 (COUNCIL OF SCIENTIFIC & INDUSTRIAL RESEARCH) 23 July 2015 (2015-07-23)<br>entire text | 1-6 |
| A | CN 113003968 A (CHINA UNIVERSITY OF MINING AND TECHNOLOGY) 22 June 2021 (2021-06-22)<br>entire text | 1-6 |
| A | WO 2019/160405 A1 (CONCR3DE B.V.) 22 August 2019 (2019-08-22)<br>entire text | 1-6 |
| A | US 2015/0321954 A1 (CEMENT AUSTRALIA PTY LIMITED) 12 November 2015 (2015-11-12)<br>entire text | 1-6 |
| A | JP 2019-532002 A (SIKA TECHNOLOGY AG) 07 November 2019 (2019-11-07)<br>entire text | 1-6 |
| A | JP 2021-178742 A (NIPPON STEEL CORP) 18 November 2021 (2021-11-18)<br>entire text | 1-6 |

☐ Further documents are listed in the continuation of Box C.  ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **02 October 2023** | **17 October 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/031622**

| Patent document cited in search report | | | Publication date (day/month/year) | Patent family member(s) | | | Publication date (day/month/year) |
|---|---|---|---|---|---|---|---|
| US | 2015/0203405 | A1 | 23 July 2015 | (Family: none) | | | |
| CN | 113003968 | A | 22 June 2021 | (Family: none) | | | |
| WO | 2019/160405 | A1 | 22 August 2019 | EP | 3752476 | A1 | |
| US | 2015/0321954 | A1 | 12 November 2015 | WO | 2014/075134 | A1 | |
| JP | 2019-532002 | A | 07 November 2019 | US | 2019/0202737 | A1 | |
| | | | | entire text | | | |
| | | | | WO | 2018/069165 | A1 | |
| | | | | EP | 3526174 | A1 | |
| | | | | CN | 109803940 | A | |
| JP | 2021-178742 | A | 18 November 2021 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5091519 B

**Non-patent literature cited in the description**

- Japan Railway Construction, Transport and Technology Agency. *Sprayed Concrete Design and Construction Guideline (Proposal)*, September 2011, 35-36

- Japan Railway Construction, Transport and Technology Agency. *Sprayed Concrete Design and Construction Guideline (Proposal)*, September 2011, 36-39